# EUROPÄISCHE PATENTSCHRIFT

(11) **EP 1 735 395 B1**
(45) Veröffentlichungstag und Bekanntmachung des Hinweises auf die Patenterteilung: **19.03.2008**
(21) Anmeldenummer: 05732389.1
(22) Anmeldetag: 30.03.2005
(51) Int. Cl.: C09G 3/00, A63C 5/056

(54) **GLEITMITTELMODIFIKATOR ZUR VERBESSERUNG DER TRIBOLOGISCHEN GLEITEIGENSCHAFTEN VON WINTERSPORTGERÄTEN AUF SCHNEE**
SLIDING AID MODIFIER FOR IMPROVING THE TRIBOLOGICAL SLIDING PROPERTIES OF WINTER SPORTS EQUIPMENT ON SNOW
MODIFICATEUR DE LUBRIFIANTS POUR AMELIORER LES PROPRIETES TRIBOLOGIQUES DE GLISSE D'ARTICLES DE SPORT D'HIVER SUR LA NEIGE

(30) Priorität: 30.03.2004 DE 102004015519
(43) Veröffentlichungstag der Anmeldung: 27.12.2006
(73) Patentinhaber: HOLMENKOL Sport-Technologies GmbH & Co. KG, 71254 Ditzingen (DE)
(72) Erfinder: FELIX, Florian, 82467 Garmisch-Partenkirchen (DE)
(74) Vertreter: Beetz & Partner
(86) Internationale Anmeldenummer: PCT/EP2005/003333
(87) Internationale Veröffentlichungsnummer: WO 2005/095533

(56) Entgegenhaltungen:
- WO-A-00/29490
- DE-A1- 10 231 642
- US-A- 3 856 686
- US-A1- 2003 134 130

## Beschreibung

Die Erfindung betrifft einen Zusatzstoff mit modifizierenden Eigenschaften für Gleitmittel, welche auf Wintersportgeräte aufgebracht werden, um deren tribologische Gleiteigenschaften auf Schnee zu verbessern. Der Zusatzstoff kann in Gleitmittel eingemischt, oder auch auf mit Gleitmitteln behandelte Oberflächen von Wintersportgeräten aufgerieben werden. Die Erfindung betrifft ferner Gleitmittel für Wintersportgeräte in welchen dieser Zusatzstoff vorhanden ist.

Die Gleitfläche von Wintersportgeräten besteht in der Regel aus einer Platte, die in der Regel aus gesinterten oder extrudierten Thermoplasten besteht. Bei diesen Thermoplasten handelt es sich in der Regel um Polyethylene, meist um Polyethylene hoher Dichte und mit hohem Molekulargewicht, wie zum Beispiel PE - UHMW.

Diese Gleitfläche wird meist durch Schleifen mit einer Oberflächenstruktur versehen, welche optimale Strömungsverhältnisse beim Gleiten auf Schnee schaffen soll.

Zusätzlich zu dieser Struktur wird die Gleitfläche der Wintersportgeräte mit Gleitmitteln imprägniert, welche die tribologischen Gleiteigenschaften auf Schnee verbessern sollen.

Als Gleitmittel für Wintersportgeräte sind bekanntermaßen im allgemeinen Skiwachse zu nennen. Diese bestehen meist aus additivierten Paraffinen welche je nach Schneeart unterschiedliche Viskositäten und Zusatzstoffe besitzen. Als Zusatzstoffe sind bisher fluorierte Thermoplasten (z.B.: PTFE, PFA, fluoriertes Polyethylen), Öle (z.B.: Siliconöle), Hexen, Okten, Molybdändioxid bekannt, welche die hydrophoben Eigenschaften, sowie die Reibungseigenschaften modifizieren. Des Weiteren wird zur Verbesserung der antistatischen Eigenschaften Graphit und Ruß eingesetzt. Ansonsten werden noch diverse Farbmittel und Duftstoffe verwendet, die jedoch lediglich der Färbung und der Geruchsbildung der Skiwachse dienen.

Aufgrund der starken Konkurrenz von verschiedenen Gleitmitteln bezogen auf viele Wintersportarten, wie beispielsweise bei alpinen und nordischen Skirennen besteht ständiger Bedarf nach neuen modifizierten Gleitmitteln, welche bessere tribologische Gleiteigenschaften besitzen und somit ausschlaggebend sind für sportliche Erfolge.

Erfindungsgemäß wird ein Zusatzstoff für Gleitmittel zur Verfügung gestellt, der aus hydrophobierter Kieselsäure besteht. Vorzugsweise handelt es sich bei der hydrophobierten Kieselsäure um eine chemisch nachbehandelte hydrophobierte Kieselsäure, insbesondere wird eine hydrophobierte pyrogene Kieselsäure bevorzugt, deren Oberfläche durch eine Funktionalisierung mit hydrophoben Gruppen wie beispielsweise Silanen, Silazanen und Siloxanen irreversibel hydrophobiert wird und auch elektrisch stark leitfähig gemacht wird.

Hierbei wird eine hydrophobierte Kieselsäure mit mittleren Primärpartikelgrößen von 1-1000 nm bevorzugt, insbesondere mit mittleren Primärpartikelgrößen von 3 -50 nm, besonders bevorzugt wird eine mittlere Primärpartikelgröße von etwa 14 nm. Geeignete Handelsprodukte sind beispielsweise hydrophobierte Kieselsäuren der Firma Degussa aus der Produktgruppe Aerosil R, besonders bevorzugt ist das Produkt Aerosil R 8200.

Überraschend wurde gefunden, dass Gleitmittel, die zusätzlich mit dem erfindungsgemäßen Modifikator ausgerüstet waren, deutlich bessere tribologische Gleiteigenschaften mit Schnee aufwiesen als nicht damit zusätzlich ausgerüstete Gleitmittel.

### Beispiel

Zwei paar gleiche Ski der Firma Dynastar Belag P-tex Electra 3000 wurde mit Star SkiWax Eclipse EC1 high Fluor +8...-3°C imprägniert, mit einer Wachsklinge abgezogen und mit einer Strukturbürste behandelt. Die Lufttemperatur betrug +1,5°C. Der Fahrer war bei jedem Versuch derselbe.

Auf ein Paar Ski wurde zusätzlich mit einem Kork Aerosil R8200 aufgerieben und nochmals mit einer Strukturbürste die Schliffstruktur wieder herausgearbeitet.

Die Ski mit Aerosil R8200 gleiteten schneller an und erreichten eine höhere Endgeschwindigkeit als die Referenzski. Dies wurde nochmals durch ein Rutschen in einen Gegenhang überprüft, wobei der Ski mit der Modifikation ca. 30% mehr Strecke im Gegenhang zurücklegte als der Referenzski bei gleicher Anfahrt.

Daraufhin wurde das oben beschriebene Wachs erwärmt und 10 Gew. % Aerosil R 8200 eingemischt. Ein Ski wurde mit dem herkömmlichen oben beschriebenen Wachs, der andere mit dem modifizierten Wachs behandelt, was in gleicher Weise wie oben beschrieben erfolgte.

Hier war ebenfalls der modifizierte Ski im Vorteil, jedoch legte er bei dem oben beschriebenen Gegenhangversuch jetzt nur ca. 20% mehr Strecke im Gegenhang zurück.

Alle soeben beschriebenen Versuche wurden in gleicher Weise nun bei kaltem Schnee (Lufttemperatur -8°C) durchgeführt. Als Wachs diente nun Star SkiWax Eclipse EC2 high Fluor 0...-10°C verwendet.

### Hier waren die Ergebnisse folgendermaßen:

Die Probe mit aufgeriebenem Aerosil R 8200 legte bei dem Gegenhangversuch ca. 20% mehr Strecke im Gegenhang zurück als die Referenzprobe.

Die Probe mit dem in das Wachs zu 10 Gew. % eingemischtem Aerosil R 8200 legte bei dem Gegenhangversuch ca. 10% mehr Strecke im Gegenhang zurück als die Referenzprobe.

Des Weiteren hielten die modifizierten Wachse deutlich länger auf den Gleitflächen, was auf eine Verbesserung der Abriebeigenschaften schließen lässt.

## Patentansprüche

1. Gleitmittel für Wintersportgeräte, das Paraffin und hydrophobierte Kieselsäure enthält.

2. Gleitmittel nach Anspruch 1, **dadurch gekennzeichnet, dass** die hydrophobierte Kieselsäure eine mittlere Größe der Primärpartikel von 1 bis 1000 nm aufweist.

3. Gleitmittel nach einem der Ansprüche 1 und 2, wobei die Kieselsäure eine hydrophobierte pyrogene Kieselsäure ist.

4. Gleitmittel nach einem der Ansprüche 1 bis 3, wobei die Kieselsäure eine durch Funktionalisierung mit Silanen, Silazanen oder Siloxanen hydrophobierte, pyrogene Kieselsäure ist.

5. Verwendung von hydrophobierter Kieselsäure zur Modifikation der tribologischen Gleiteigenschaften von Wintersportgeräten auf Schnee.

6. Verwendung nach Anspruch 5, **dadurch gekennzeichnet, dass** die hydrophobierte Kieselsäure auf ein mit einem Gleitmittel vorbehandeltes Wintersportgerät aufgebracht wird.

7. Verwendung nach Anspruch 5, **dadurch gekennzeichnet, dass** die hydrophobierte Kieselsäure mit einem Gleitmittel gemischt und anschließend auf das Wintersportgerät aufgebracht wird.

8. Verwendung nach einem der Ansprüche 5 bis 7, **dadurch gekennzeichnet, dass** die hydrophobierte Kieselsäure eine mittlere Primärpartikelgröße von 1 bis 1000 nm aufweist.

9. Verfahren zur Modifikation der tribologischen Gleiteigenschaften von Wintersportgeräten auf Schnee, **dadurch gekennzeichnet, dass** hydrophobierte Kieselsäure auf ein mit einem Gleitmittel vorbehandeltes Wintersportgerät aufgebracht wird.

10. Verfahren zur Modifikation der tribologischen Gleiteigenschaften von Wintersportgeräten auf Schnee, **dadurch gekennzeichnet, dass** hydrophobierte Kieselsäure mit einem Gleitmittel gemischt und anschließend auf das Wintersportgerät aufgebracht wird.

11. Verfahren nach Anspruch 9 oder 10, **dadurch gekennzeichnet, dass** die hydrophobierte Kieselsäure eine mittlere Größe der Primärpartikel von 1 bis 1000 nm aufweist.

## Claims

1. Lubricant for winter sports equipment containing paraffin and hydrophobized silica.

2. Lubricant according to claim 1, **characterized in that** the hydrophobized silica has an average size of the primary particles of 1 to 1000 nm.

3. Lubricant according to one of claims 1 and 2, the silica being a hydrophobized pyrogenic silica.

4. Lubricant according to one of claims 1 to 3, the silica being a pyrogenic silica hydrophobized by functionalization with silanes, silazanes or siloxanes.

5. Utilisation of hydrophobized silica for modifying the tribological sliding properties of winter sports equipment on snow.

6. Utilisation according to claim 5, **characterized in that** the hydrophobized silica is applied on a winter sports equipment, which was pretreated with a lubricant.

7. Utilisation according to claim 5, **characterized in that** the hydrophobized silica is mixed with a lubricant and subsequently applied on the winter sports equipment.

8. Utilisation according to any of claims 5 to 7, **characterized in that** the hydrophobized silica is having an average size of primary particles of 1 to 1000 nm.

9. Method for modification of the tribological sliding properties of winter sports equipment on snow, **characterized in that** the hydrophobized silica is applied on a winter sports equipment, which was pretreated with a lubricant.

10. Method for modification of the tribological sliding properties of winter sports equipment on snow, **characterized in that** the hydrophobized silica is mixed with a lubricant and subsequently applied on the winter sports equipment.

11. Method according to claim 9 or 10, **characterized in that** the hydrophobized silica is having an average size of the primary particles of 1 to 1000 nm.

## Revendications

1. Lubrifiant pour appareil de sports d'hiver, qui contient de la paraffine et de l'acide silicique hydrophobisé.

2. Lubrifiant selon la revendication 1, **caractérisé en ce que** l'acide silicique hydrophobisé présente une taille moyenne des particules primaires allant de 1 à 1000 nm.

3. Lubrifiant selon une des revendications 1 et 2, dans lequel l'acide silicique est un acide silicique pyrogène hydrophobisé.

4. Lubrifiant selon l'une des revendications 1 à 3, dans lequel l'acide silicique est un acide silicique pyrogène hydrophobisé par une relation fonctionnelle avec des silanes, silazanes ou siloxanes.

5. Utilisation d'acide silicique hydrophobisé pour la modification des propriétés de glissement tribologiques d'appareils de sports d'hiver sur la neige.

6. Utilisation selon la revendication 5, **caractérisée en ce que** l'acide silicique hydrophobisé est déposé sur un appareil de sports d'hiver prétraité avec un lubrifiant.

7. Utilisation selon la revendication 5, **caractérisée en ce que** l'acide silicique hydrophobisé est mélangé avec un lubrifiant et ensuite déposé sur l'appareil de sports d'hiver.

8. Utilisation selon l'une des revendications 5 à 7, **caractérisée en ce que** l'acide silicique hydrophobisé présente une taille moyenne de particules primaires allant de 1 à 1000 nm.

9. Procédé de modification des propriétés de glissement tribologiques d'appareils de sports d'hiver sur la neige, **caractérisé en ce que** l'acide silicique hydrophobisé est déposé sur un appareil de sports d'hiver prétraité avec un lubrifiant.

10. Procédé de modification des propriétés de glissement tribologiques d'appareils de sports d'hiver sur la neige, **caractérisé en ce que** l'acide silicique hydrophobisé est mélangé avec un lubrifiant et puis déposé sur l'appareil de sports d'hiver.

11. Procédé selon la revendication 9 ou 10, **caractérisé en ce que** l'acide silicique hydrophobisé présente une taille moyenne des particules primaires allant de 1 à 1000 nm.
